# EUROPEAN PATENT APPLICATION

(11) **EP 3 196 536 A1**
(43) Date of publication of application: **26.07.2017**
(21) Application number: 15818288.1
(22) Date of filing: 08.07.2015
(51) Int. Cl.: F21L 4/00, F21L 4/04, F21L 4/08, F21V 33/00, F21V 23/00, F21V 17/00, F21V 17/12

(54) **PORTABLE SOLAR LIGHT THAT CAN BE SECURED TO FUNCTIONAL ACCESSORIES THAT CAN BE ILLUMINATED**

(30) Priority: 11.07.2014 CL 20141840
(71) Applicant: SULILAB SPA, Santiago (CL)
(72) Inventor: MUÑOZ ABOGABIR, Ximena, Santiago 7510765 (CL)
(74) Representative: Herrero & Asociados, S.L.
(86) International application number: PCT/CL2015/050024
(87) International publication number: WO 2016/004543

(57) **Abstract**

A solar light, base component for multiple applications with functional accessories which can be illuminated comprised by:
an upper housing (4) having an outer flat surface with a perimeter edge which gives way to a central circular surface which corresponds to the solar panel disc which the photovoltaic cells (1) are fixed to, said edge or perimeter rubber (2) is projected towards the lower end of the upper housing (4) on a lower perimeter bulge (3) which has a curve convex shape designed to house the on/off switch button (5) of the light; a middle panel or middle piece (8) which houses the battery case (9) together with the contact snaps (6,7) of the batteries, a printed circuit board and the light generator means (10) and an O-ring seal (11); and a lower translucent housing (12) formed by an inverted truncated-cone shaped body having on its lower flat face a central cylindrical hole (16) having an inner threading (15) which on its bottom edge has fixed a flat convex lens (17) and on which inverted truncated-cone mantle of the lower translucent housing (12) is disposed, at half height, a horizontal perimeter rib which forms the perimeter threading (13) which is interrupted by three vertical notches or cutouts (14) in a semi-circular cross section shape, disposed equidistant and wherein said lower translucent housing (12) includes lateral and central fixation means of the light to the functional accessories that can be illuminated.

## Description

### Technical Field of the Invention

The present invention patent relates to a solar light as a base component for multiple lighting applications with functional illuminable accessories. Particularly, the light has multiple applications for both home and garden, in a bicycle or tricycle, when camping, in emergency situations and in other similar applications without the need of being modified or tampered with.

The light comprises a microprocessor which regulates the light hours as well as the light intensity, rechargeable batteries, an upper housing containing the photovoltaic cell and an on/off button in order to make an efficient use of the light, and a lower housing made of translucent plastic having a lateral threaded fixation element and another lower central fixation element, also threaded for the snap fit or screwed coupling of the light with respect to the multiple illuminable accessories.

### Background of the Invention

In the state of the art diverse types of flashlights and lights, portable and fed by means of solar cells and/or batteries have been disclosed, however each one of the same is aimed for a sole use or application, not being adequate for multiple uses as in the case of the present invention patent.

For instance, patent US 5,465,197 by Tseng-Lu Chien, granted dated November 7, 1995, relates to a light or portable light which comprises a shell defining an opening. The shell is linked to a lens so as to cover the mentioned opening therein wherein a printed circuit board (PCB) is contained in the shell. Said printed circuit is operatively connected with a metal strip, wherein a dry battery is disposed between the PCB and said metal strip. The shell is designed to be attached to a buckle of a shoe lace, as a light.

Patent US 6.406.163, property of Tai-Her Yang, granted on June 18, 2002 discloses a light energized with a photovoltaic cell being integrated with a heat sink adapted to a lantern, more specifically for a garden light. A housing-type structure containing the battery components such as a secondary cell or battery capacitor, a charging circuit or a component to convert electrical energy into optical energy, and operation and control circuits. The support structure defines a space for the heat sink, thus allowing heat dissipation for the area between the upper lid and the bulb, thus protecting the charging circuit and battery components from being damaged by heat built up due to prolonged exposure to the direct sun.

Patent US 5.152.601, property of Shing-Lai Ferhng, granted on October 6, 1992 describes a light fed by solar photovoltaic cells, which comprises a protective shell to cover a control circuit, consisting of a battery, a power switch and an IC board, in addition to a column having a plurality of LEDs. The light is protected by a transparent convex cover and a photovoltaic cell is supported on a column inside the cover, being connected to the control circuit of the electrical feeding source. The lamp is aimed to the exclusive use as a warning lamp in a construction work.

Patent US 8.585.231, property of Jesse C. May, granted on November 19, 2013, discloses a grave marker assembly including a support arm, a flagpole integrally formed o fixed to said support arm, a photovoltaic cell fixed to said support arm; a light emitter fixed to the support arm, a rechargeable battery and a network of electrical conductors interconnected with a photovoltaic cell. This light relates to the specific application in a cemetery.

Patent WO 2005/124222, property of Ignite Innovations, Inc, published dated December 29, 2005, discloses a lighting device provided with an adjustable focus useful as a portable lamp or pendant light, which comprises a housing protecting one or more batteries, an opening in the housing with a mounting disc and an optical plate and a lid designed to fix the mounting disc in said optical plate. A light source is fixed to the mounting disc. The light emitted from the device can be focused to a light beam by rotating the optical plate. The lamp has a solar panel with an orientation according to the optimum load angle when mounted vertically.

Patent US 7.997.755, property of Su-Chang Liao, granted dated August 16, 2011, discloses a flashlight assembly provided with a conventional incandescent light bulb, which includes an outer housing and an inner housing, a cover partially received in the outer housing and base disposed in a top of the outer housing. The parts of the device being firmly assembled through side grooves and projections engaging to each other to firmly attach the inner housing, the outer housing, the base and the flashlight cover.

The previously described documents from the state of the art, disclose diverse portable luminaries designed to comply with determined functions, however, an analysis in relation to these documents allows concluding that they deal with portable lamps aimed to comply with a specific application, which means they are not versatile in its use, as in the case of the light object of the present invention patent, which besides having its individual use as a light, allows, in a simplified way, its attachment to different lighting products or functional accessories that can be illuminated through lateral and lower fixation elements incorporated in the lower housing of the light.

Advantageously, the shape of the light allows it to be laterally coupled or attached or from below to different functional accessories or components that can be illuminated, which allow it to comply with multiple applications, wherein the user can freely intervene said light in a functional or creative way.

The light is provided with a photovoltaic charging system, which by means of a photovoltaic cell on its upper face, feeds the inner rechargeable batteries.

### DESCRIPTION OF FIGURES

The attached figures are aimed to provide a better understanding of the invention patent and illustrate some of embodiments while explaining the functionality of the components of the invention.
Figure 1 is a top view which shows the solar panel disc with the photovoltaic cell.
Figure 2 is a profile view wherein the right side of the on/off button, together with the lateral threaded fixation element is shown.
Figure 3 is a top side perspective view of the light, wherein on the lateral and central part is shown the on/off button and the photovoltaic cell is shown on the upper surface.
Figure 4 is a bottom view of the light which shows the lateral threaded perimeter and central fixation elements of the light with respect to the functional lighting elements, and the assembly screws of the parts of the light, located on the center of the three perimeter notches or cutouts in a semi-circular cross section.
Figure 5 is another perspective view of the same light on the lower and lateral side in which the three perimeter equidistant notches and the perimeter lateral and central threading can be used as couplings with respect to the lighting functional elements.
Figure 6 shows an exploded perspective view of the light showing all its components.
Figure 7 shows a perspective view of an application of the light placed between two supports which are fixed to a circular section bar such as, on the arm of a bicycle or tricycle.
Figure 8 is an end elevation view of the set of supports carrying the light, wherein said light is disposed between said supports.
Figure 9 is a profile view of the juxtaposed supports, carrying the light inside of them.
Figure 10 is a top view corresponding to figure 8.
Figure 11 is a sectional view along line A-A' of figure 8.
Figure 12 is an exploded perspective view of an application of the light screwed to the head of a stake or rod to be placed on the ground or soil, such as a garden light or for delimitating paths or roads outside the house.
Figure 13 is a former elevation view of the set of the stake or rod together with the light screwed to its head.
Figure 14 is an elevation view in a B-B' cutting of the stake or rod of figure 13, showing the anchoring system of the light to the rod.
Figure 15 is a bottom exploded perspective view of another application of the light fixed by means of a lateral thread inside of a pendant screen type accessory.
Figure 16 is a top perspective view of the accessory that can be illuminated of the pendant screen of figure 15.
Figure 17 is a side view of the light fixed to the pendant screen accessory.
Figure 18 is an elevation view of another application of the light screwed to a universal PET type bottle neck.
Figure 19 shows a foldable cardboard template which can be used for packing the light when not in operation and as a support for the light when is in operation.
Figure 20 shows a perspective of the packing for the light when in operation, in a triangular shape, wherein the light is incorporated in one of its faces.
Figure 21 shows a perspective view of the support packing with the light incorporated therein, showing the lower housing and lateral and lower central fixation means of the light.
Figure 22 shows a front view of the support packing with the light not in operation, which shows the solar panel disc with the photovoltaic cell.
Figure 23 is a left profile view of the packing not in operation with the light incorporated therein, showing the packing with the side faces inwardly folded.
Figure 24 shows an end view of the support packing with the light not in operation, which shows the lateral and lower central fixation means of the light with respect to the functional accessories that can be illuminated.

### DETAILED DESCRIPTION OF THE INVENTION PATENT

Following, the light object of the present invention will be described making reference to the drawings of the attached figures.

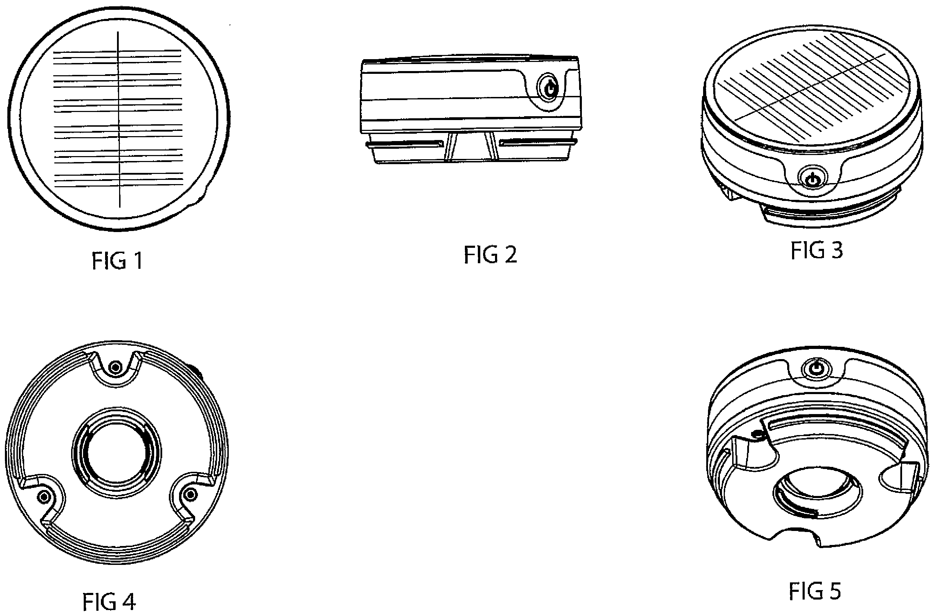

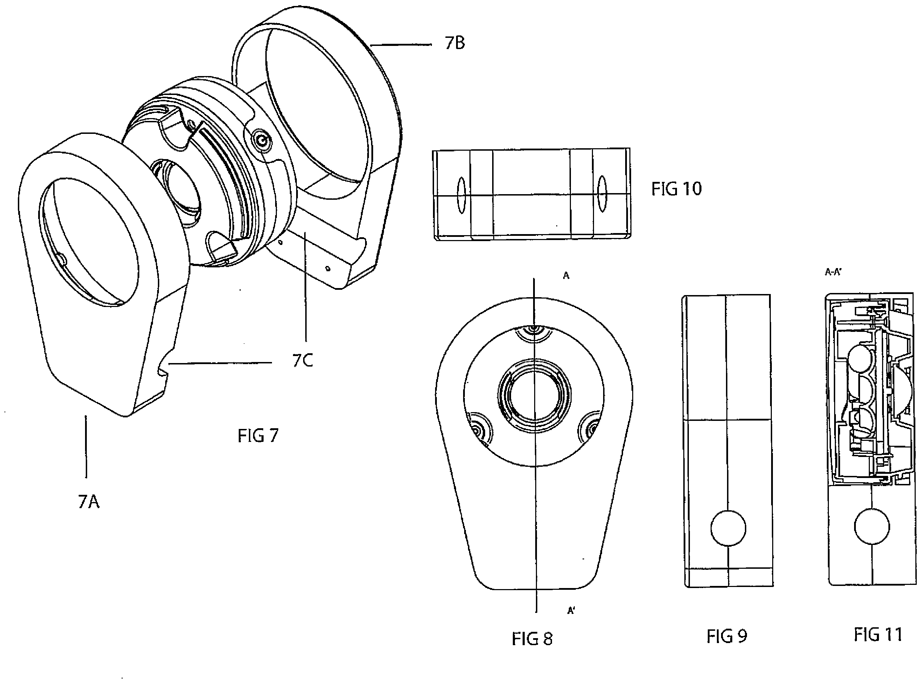

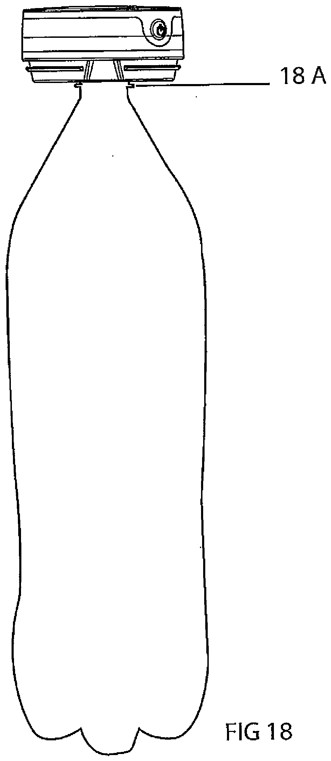

When making reference to figures 1 to 5, they show the light in its final assembled condition to be then incorporated into the multiple applications described and shown in figures 7 to 24 such as bicycles or tricycles, light stakes for gardens, lamp shades, PET bottles or a cardboard packing.

The light has a general cylindrical shape, which diameter is around twice its height, being formed by an upper body or upper housing (4) which has a flat outer surface with a perimeter edge, also flat that gives way to a central circular surface comprised by a solar panel disc which photovoltaic cells are fixed to (1).

In the profile view, the upper housing (4) has a horizontal upper edge on the mantle formed by the perimeter rubber (2) which projects itself towards the lower end of the upper housing (4) in a lower curved convex prolongation or bulge inside of which is disposed a circular hole centrally containing the on/off button (5) in a truncated-cone shape, wherein said lower bulge (3) extends beyond a central horizontal slot of the mantle near the lower end of the upper housing (4).

The upper housing (4) of the light has attached to it a body or lower housing (12) in an inverted truncated-cone shape of a lower height in comparison with the upper housing (4), which has on its lower circular flat face a cylindrical central hole (16) with a perimeter threaded inner edge (15) on which lower edge a convex flat lens (17) is fixed. The perimeter threaded edge (15) allows fixing the light to the application support that can be illuminated by screwing the light to multiple functional accessories that can be illuminated.

On the mantle of the inverted truncated-cone shaped body of the lower housing (12), at half height, a perimeter horizontal rib is disposed, which comprises the perimeter threading (13) which is interrupted by three vertical notches (14) having a semi-circular cross section shape which cover the height of the truncated-cone body. The three notches or vertical cutouts (14) having a semi-circular cross section shape are equidistant at 120°, thereby allowing said perimeter threading (13) and said vertical notches (14) of a semi-circular cross section shape to allow the snap-fit or threaded fixation type of the light with respect to some of the functional accessories that can be illuminated.

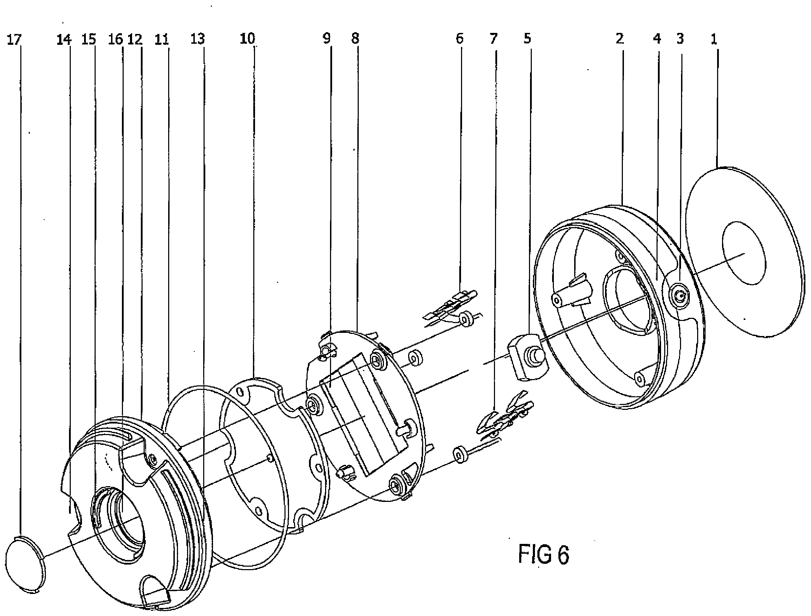

In order to describe in detail the components of the light, specific reference will be made to figure 6 which shows the components of the light.

Figure 6 shows the components of the light in an exploded view wherein said light comprises a solar panel disc which the photovoltaic cell (1) is fixed to in the perimeter rubber (2) having a lower perimeter bulge (3) designed to house the on/off switch button (5) which is housed in the upper housing (4) which is linked to the middle panel or middle piece (8) where the battery case or the batteries (9), the batteries contact snaps (6,7) and the printed circuit board (PCB), and the light generator means (10) which is linked to the lower housing (12) through an O-ring seal (11) are housed and fixed.

In the central cylindrical hole (16) of the lower translucent housing (12) a flat convex lens (17) fixed on the perimeter to the bottom edge of the central cylindrical hole (16) of the lower translucent housing (12) is provided.

The lower translucent housing (12) includes the lateral and central fixation means of the light with respect to the functional accessories that can be illuminated wherein the lateral fixation means corresponds to a perimeter threading (13) interrupted by three vertical notches or cutouts (14) having a semi-circular cross section shape, being equidistant to each other, thereby allowing the snap-fit or threaded type fixation of the light to the functional accessories that can be illuminated and the central lower fixation means which corresponds to an internally threaded cylindrical hole (15) which allows screwing the light to the functional accessories that can be illuminated wherein said lower translucent housing (12), said middle panel or middle piece (8) and said upper housing (4) are connected to each other, for the final closing of the light by means of screws.The previously mentioned light has multiple application alternatives which are expressly illustrated in figures 7 to 11 wherein in figure 7, the supports or arms (7A) and (7B) which serve to be placed in a bicycle or tricycle by means of grooves (7C), are shown and wherein the final assembly of the accessory that can be illuminated is achieved by screwing the perimeter threading (13) of the lower translucent housing (12) of the light inside the supports or arms (7A) and (7B) of the functional accessory to be illuminated.

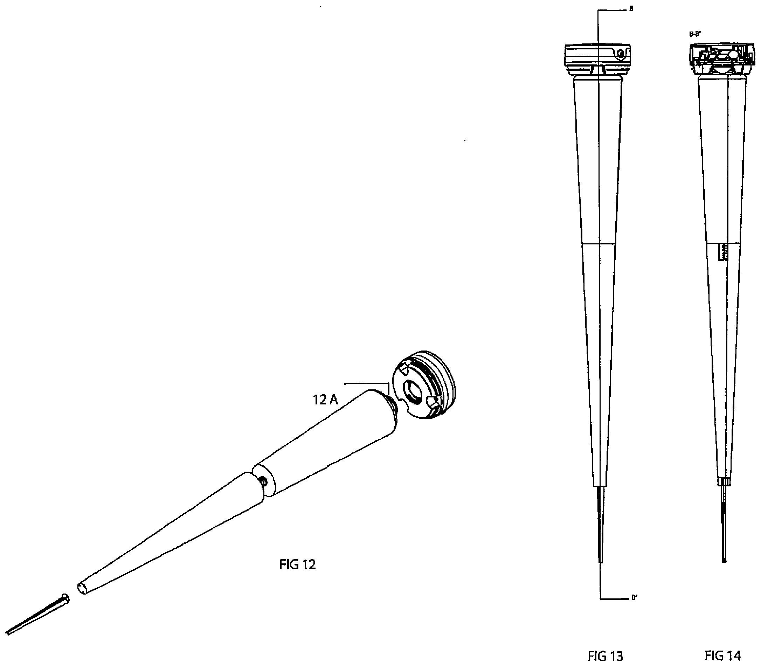

Figures 12 to 14 and 18 show an application of the light to a support that serves as a stake for gardens or as a self-supporting lamp which assembly consists simply in screwing the central thread (15) of the light to the head thread of the stake (12A) o to the thread (18A) of the PET type bottle (polyethylene terephthalate), respectively.

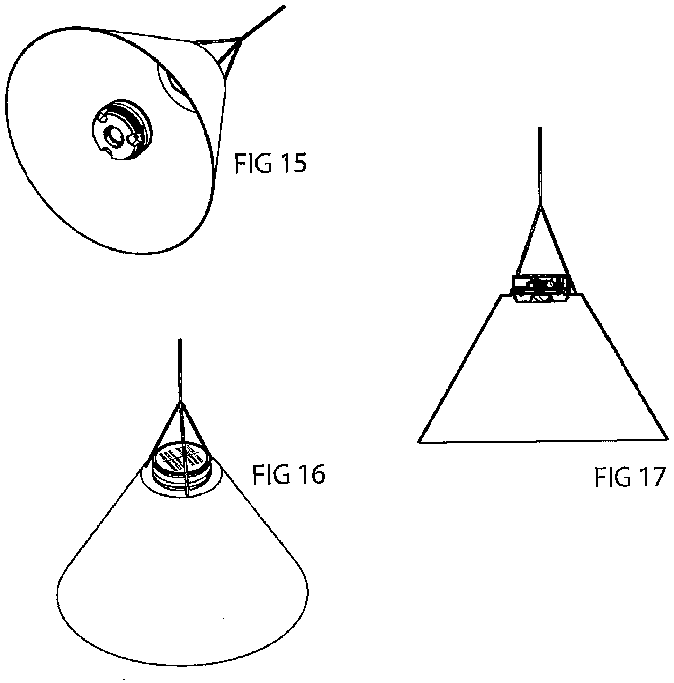

Figures 15 to 17 show the light of the present patent in an assembly application for a screen-type accessory which is fixed to the light through the perimeter side threaded ring (13).

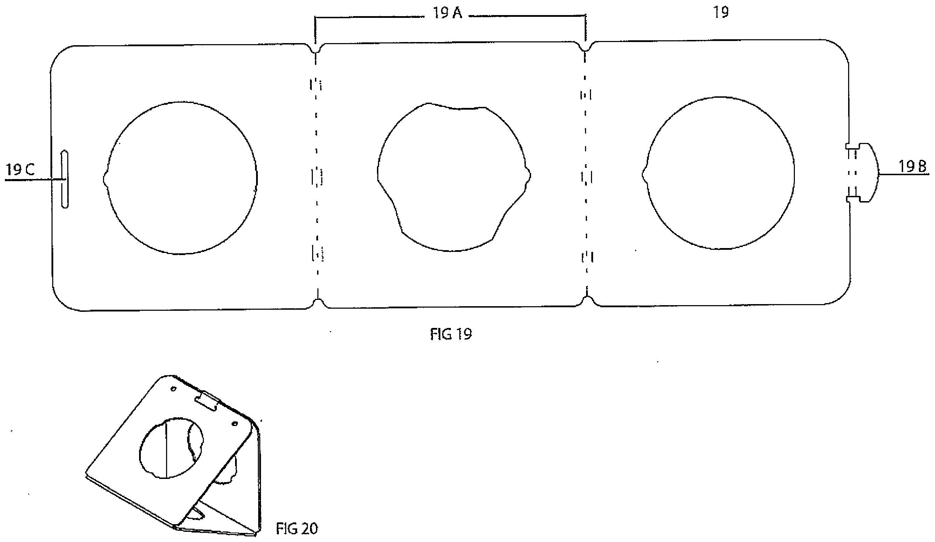

Other similar applications to the ones shown, as non-limiting application examples of the invention show the versatility of its use and can be observed in figures 19 to 24 showing the light placed on a triangular cardboard support packing formed by folding a rectangular template (19) divided in three parts of the same size in the direction of the lower sides by means of pleats and die-cuts for the folding (19A) thereby forming three faces which are also centrally die cut for inserting the light.

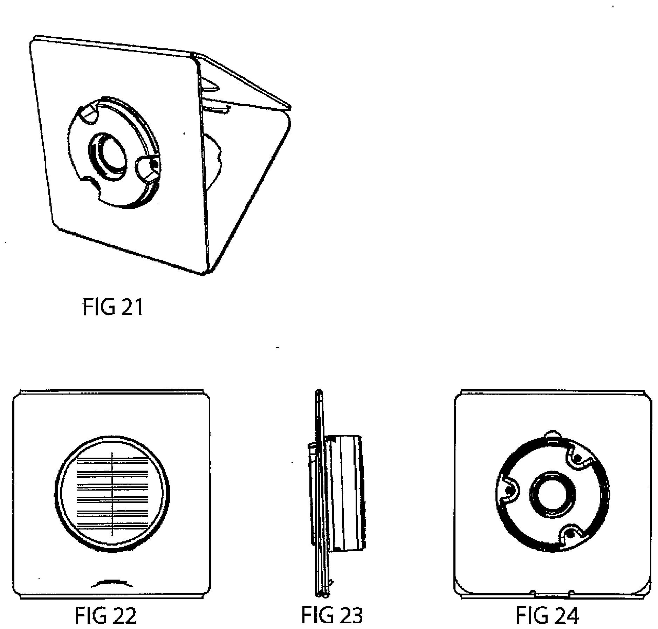

For the support assembly both pleats/die cuts are folded in the same direction and the tongue (19B) is inserted inside the die cut at the opposite end (19C) and rotating the tongue (19B) for its correct engagement, thereby forming a triangle which allows diverse positions and the orientation of the light when being in operation with the light being placed in any of the faces of the packing (see figure 21).

When not in operation, the lateral faces of the template are inwardly folded and the light is inserted through the central die cuts of the three faces, closing the template by means of the snap-fit and folding of the tongue (19B) in the die cut (19C).

## Claims

1. A solar light, base component for multiple applications with functional accessories to be illuminated, formed by a microprocessor which adjusts the light hours and intensity thereof, rechargeable batteries, an upper housing which contains the photovoltaic cell, an on-off button in order to make an efficient use of the light, a lower housing **CHARACTERIZED in that** comprises a cylindrical body wherein its height is approximately half of its diameter, formed by:
an upper housing (4) having an outer flat surface with a perimeter edge which gives way to a central circular surface which corresponds to the solar panel disc which the photovoltaic cells (1) are fixed to, said edge or perimeter rubber (2) is projected towards the lower end of the upper housing (4) on a lower perimeter bulge (3) which has a curve convex shape designed to house the on/off switch button (5) of the light;
a middle panel or middle piece (8) which houses the battery case (9) together with the contact snaps (6,7) of the batteries, a printed circuit board and the light generator means (10) and an O-ring seal (11); and
a lower translucent housing (12) formed by an inverted truncated-cone shaped body having on its lower flat face a central cylindrical hole (16) having an inner threading (15) which on its bottom edge has a flat convex lens (17) and on which inverted truncated-cone mantle of the lower translucent housing (12) is disposed, at half height, a horizontal perimeter rib which forms the perimeter threading (13) which is interrupted by three vertical notches or cutouts (14) in a semi-circular cross section shape, disposed equidistant and wherein said lower translucent housing (12) includes lateral and central fixation means of the light to the functional accessories to be illuminated.

2. The light according to claim 1 **CHARACTERIZED in that** the lateral fixation means comprises a perimeter threaded thread (13), interrupted by three vertical notches or cutouts (14) having a semi-circular cross section shape, being equidistant to each other at 120°, which allows the snap-fit or threading type fixation of the light to the functional accessories to be illuminated.

3. The light according to claim 1 **CHARACTERIZED in that** the central fixation means comprises a cylindrical internally threaded hole (15) which allows screwing the light to the functional accessories to be illuminated.

4. The light according to claims 1 and 2 **CHARACTERIZED in that** the lower housing comprises a perimeter threaded thread (13) and vertical notches or cutouts (14) having a semi-circular cross section shape, being equidistant to fix the light to the supports of a circular section bar, such as a bicycle or tricycle arm.

5. The light according to claim 1 and 3 **CHARACTERIZED in that** the lower housing comprises a cylindrical internally threaded hole (15) to fix the light to a stake or rod for a garden or road delimitation.

6. The light according to claims 1 and 2 **CHARACTERIZED in that** the lower housing comprises a perimeter threaded thread (13) and vertical notches or cutouts (14) having a semi-circular cross section shape, being equidistant to fix the light to a screen-type accessory.

7. The light according to claim 1 and 3 **CHARACTERIZED in that** the lower housing comprises a cylindrical internally threaded hole (15) to fix the screwed light to a PET bottle neck to form a self-supporting light.

8. The light, according to claims 1 and 2 **CHARACTERIZED in that** the lower housing has a perimeter threaded thread (13) for fixing the light to a support packing accessory being foldable and triangular for different positions and orientation of light.
